# EUROPEAN PATENT APPLICATION

(11) **EP 0 982 349 A2**
(43) Date of publication of application: **01.03.2000**
(21) Application number: 99116551.5
(22) Date of filing: 24.08.1999
(51) Int. Cl.: C08G 77/14, C08G 77/20, C08G 77/26, C08G 77/28

(54) **Adhesion promoting organosiloxane compositions**

(30) Priority: 28.08.1998 US 143639; 09.07.1999 US 350743
(71) Applicant: DOW CORNING CORPORATION, Midland Michigan 48686-0994 (US)
(72) Inventor: Lutz, Michael Andrew, Hope, Michigan 48628 (US); Perz, Susan Victoria, Essexville, Michigan 48632 (US); Owen, Michael James, Midland, Michigan 48640 (US)
(74) Representative: Patentanwälte Sternagel & Fleischer

(57) **Abstract**

The present invention relates to organosilicon compositions that are reaction products of a polyhydric alcohol and a silane wherein the silicon atom is bonded to at least one organofunctional group and at least two hydrolyzable groups. The organosilicon compositions are particularly useful as adhesion promoters for organopoly-siloxanes containing functional groups capable of curing these polymers.

## Description

This invention relates to organosilicon compounds that are reaction products of ingredients comprising organosilanes containing organofunctional groups and polyhydric alcohols. The reaction products are particularly useful as adhesion promoters for curable organopolysiloxane compositions.

US Patent 2,349,338 teaches using silicic acid esters of monohydric and polyhydric alcohols, including various glycol and glycerol silicate ester derivatives as corrosion prevention additives for heat transfer liquids. The corrosion prevention is afforded by the hydrolysis product of these compounds.

US Patent 2,776,307 claims silicone esters of the type (R¹O)₃Si(XR²)ₙOSi(OR³)₃, where X can be oxygen and n has a value of 2, 3 or 4. The compounds are useful as hydraulic fluids and lubricants.

US Patent 3,992,429 describes novel alkoxysilane cluster compounds containing sterically hindered alkyl groups to improve hydrolytic stability. Intended uses include heat transfer fluids, hydraulic fluids, brake fluids, transmission fluids, and the like.

US Patent 2,630,446 describes polymeric silicates prepared from tetraalkylsilicates and polyhydric alcohols. These silicates are intended for use as plasticizers, lubricants and hydraulic fluid additives.

H.G. Emblem and K. Hargreaves ("The Preparation of Alkoxysilanes from Glycols and Glycol Monoethers," J. Inorg. Nucl. Chem., Vol. 30 (3), p. 721, 1968) report various reactions useful to prepare the title compounds, none of which contain silicon-bonded organofunctional groups.

UK Patent 450,875 teaches a transesterification process for the manufacture of new esters of ortho-silicic acid. The disclosure indicates that esters derived from ortho-silicic acid and polyhydroxylated alcohols are known.

US Patent 3,029,269 describes compounds of the type (RO)₃SiOCR'₂(CH₂)ₙCR'₂-OSi(OR)₃, where n is 0-16 and R' is H or a lower aliphatic radical and R is a saturated aliphatic radical containing from 1 to 16 carbons. The compounds are suggested as lubricants and hydraulic fluids and in general show low pour point, good viscosity and viscosity index properties as well as hydrolytic stability.

US Patent 5,424,384 discloses curable organosiloxane compositions with improved adhesion containing as the adhesion promoting additive a reaction product of a polyhydric alcohol and a silane containing alkoxy or alkenyloxy groups bonded to the silicon atom. Silanes containing organofunctional groups are not described in this patent.

US Patent 5,486,565 teaches new organosilicon compositions comprising a reaction product of a polyhydric alcohol, an alcohol containing organofunctional groups and a silane containing moisture-reactive substituents. Curable organosiloxane compositions containing these compounds as adhesion promoting additives are also claimed.

US Patents 4,659,851, 4,719,262 and 4,906,686 teach reaction products of unsaturated alcohols with alkoxysilanes.

Adhesion promoters for organosiloxane compositions typically contain at least two functional groups. US Patentd 3,772,026 and 3,873,334 teach acyloxy functional silanes which additionally have silicon hydride or alkenyl functionality respectively. Although the acyloxy functionality is very reactive, it liberates corrosive acetic acid upon reaction with hydroxyl groups present at the surface of the substrate or with water ingressing into the composition.

US Patent 4,082,726 teaches organosilicon compounds containing epoxy functional dialkoxysilyl groups and at least one alkenyl group or hydrogen atom bonded to silicon in the organosilicon compound. Adhesion with compositions containing these compounds is demonstrated after cure between 100-2000°C.

US Patent 4,087,585 teaches physical blends of epoxy functional alkoxysilanes with silanol functional fluids containing alkenyl functionality. Cure was obtained at elevated temperatures.

Multifunctional organosilanes containing ethylenic unsaturation, epoxy functionality and alkoxy functionality are taught in US Patent 4,732,932.

US Patent 4,721,764 teaches organopolysiloxanes which contain two silicon bonded hydrogen atoms and at least one silicon bonded hydrolyzable group or oxirane group. This invention relates to organosilicon compositions comprising at least one reaction product of ingredients comprising (A) a polyhydric alcohol of the general formula R¹(OH)ₘ, and (B) a silane of the formula R²ₙR³ₚSiY₄₋ₙ₋ₚ, wherein R¹ is a hydrocarbon radical having a valence of m and no ethylenic unsaturation, R² is an unsubstituted hydrocarbon radical, R³ is a monovalent hydrocarbon radical containing at least one organofunctional substituent selected from CH₂=CH-, acryloxy, methacryloxy, epoxy, carboxy, amino, amido, acrylamido, mercapto, methacrylamido or 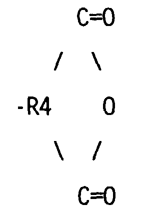 where R⁴ represents a trivalent hydrocarbon radical; Y represents a hydrolyzable group; m is at least 2; n is 0 or 1; and p is 1 or 2, with the proviso that the sum of n + p does not exceed 2 and said polyhydric alcohol constitutes from 5 to 90 weight percent of said ingredients. The polyhydric alcohol will be referred to hereinafter as ingredient A and the silane as ingredient B.

Ingredient B preferably constitutes from 50 to 90 percent of the combined weight of this ingredient and ingredient A.

The ingredients used to prepare the present compositions optionally includes a silane, referred to hereinafter as ingredient C. This silane has the formula R⁵ₜSiY'₄₋ₜ, wherein R⁵ is an unsubstituted hydrocarbon group, Y' represents a hydrolyzable group selected from the same group as Y and t is 0 or 1.

As used in the present specification, the hydrolyzable groups represented by Y and Y' include, but are not limited to, alkoxy, isoalkenyloxy, carboxy, ketoximo, amino and amido.

When present, ingredient C constitutes up to 80 mole percent, preferably 1 to 80 mole percent and more preferably from 30 to 70 mole percent, of the combination of ingredients B and C. Preferred silanes for use as ingredient C include, but are not limited to, methyltrimethoxysilane and tetraethyl orthosilicate.

The weight ratio of ingredient A to the combination of ingredients B and C is preferably 1 part by weight of ingredient A per 1 to 10 parts of the combined weight of ingredients B and C.

The reaction products of the present invention impart excellent adhesion when polymeric compositions modified therewith are cured on various substrates. The compositions comprise (I) an organopolysiloxane polymer and (II) an adhesion promoter of the present invention, wherein the polymer contains functional groups capable of converting the composition to a cured material.

One of the reactants used to prepare the present organosilicon compositions is a polyhydric alcohol (ingredient A) represented by the generic formula R¹(OH)ₘ where R¹ represents a hydrocarbon radical exhibiting a valence of m and m is at least 2. Preferably m is from 2 to 4, inclusive. R¹ can be a linear, branched or cyclic structure which optionally contains substituents that include halogen atoms, ether (-C-O-R⁶) and ester (-OC(O)R⁶) groups, where R⁶ represents a monovalent hydrocarbon group free of ethylenic unsaturation. For the purposes of the present invention, however, such hetero atoms are not to be included within the ring of cyclic R¹ groups (e.g., lactone structures are explicitly excluded).

The hydrocarbon radical represented by R¹ contains from 2 to about 20 or more carbon atoms, is substantially free of ethylenic unsaturation and preferably is free of substituents. Preferred polyhydric alcohols contain from 2 to 10 carbon atoms and include ethylene glycol, propylene glycol, 1,3-propanediol, glycerol, 1,4-butanediol, neopentyl glycol, 2,2,2-trimethylolpropane. 2,2,2,2-tetramethylol-propane and 1,10-decanediol.

The polyhydric alcohol (ingredient A) is reacted with ingredient B, an organosilane of the formula R²ₙR³ₚSiY₄₋ₙ₋ₚ. In this formula, R² is an unsubstituted hydrocarbon radical, R³ is a monovalent hydrocarbon radical containing at least one organofunctional substituent selected from CH₂=CH-, acryloxy, methacryloxy, epoxy, carboxy, amino, amido, acrylamido, methacrylamido,
mercapto or 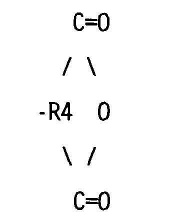 in which R⁴ is a trivalent hydrocarbon radical, Y represents a hydrolyzable group, n is 0 or 1, p is 1 or 2 and the sum of n and p does not exceed 2. Preferably R⁴ contains from 2 to 10 carbon atoms, n is 0 and p is 1.

Preferred embodiments of R³ include 3-glycidoxy-propyl, vinyl, allyl, hexenyl, 3-methacryloxypropyl and N- (2-aminoethyl ) -3-aminopropyl.

The unsubstituted hydrocarbon radical of ingredient B, represented by R², contains from 1 up to 20 or more hydrocarbon radicals. R² can be an alkyl radical such as methyl, ethyl, propyl, butyl or isobutyl, an aryl radical such as phenyl, an aralkyl radical such as benzyl or an alkaryl radical such as xylyl or tolyl. Preferably R² is alkyl and contains from 1 to 4 carbon atoms.

The hydrolyzable groups represented by Y in ingredient B include alkoxy, isoalkenyloxy, carboxy, ketoximo, amino and amido. This group is preferably an isoalkenyloxy group or an alkoxy group represented by the formula OR⁷, wherein R⁷ is an alkyl radical containing from 1 to about 20 carbon atoms, preferably from 1 to 4 carbon atoms. R⁷ is most preferably methyl or ethyl.

Preferred silanes for ingredient B include those containing one hydrocarbon radical having an organofunctional substituent and three alkoxy groups which contain from 1 to 4 carbon atoms. Specific examples of preferred silanes are vinyltrimethoxysilane, allyltrimethoxysilane, allyltriethoxysilane, hexenyltrimethoxysilane, 3-glycidoxypropyltrimethoxysilane, 3-glycidoxypropyltriethoxysilane, 3- (N-2'-aminoethyl)amino-propyltrimethoxysilane, 3-methacryloxypropyltrimethoxysilane and 3-methacryloxypropyltriethoxysilane.

The preferred alkoxysilanes can be prepared and isolated prior to reaction with the polyhydric alcohol or they can be prepared by reaction of the corresponding chlorosilane with the desired monohydric alcohol in the same reactor in which it is subsequently reacted with ingredient A.

A preferred method for preparing the organosilicon compositions is by reacting ingredients A and B. If a silane corresponding to ingredient C is used, this ingredient is also included in the reaction mixture.

The reaction between the polyhydric alcohol and the organosilane(s) is conducted under conditions that are typical for interchange reactions between alkoxysilanes or enoloxysilanes and alcohols. These reactions are typically conducted under an inert, anhydrous atmosphere such as nitrogen at temperatures from ambient to 200°C. and may employ a catalyst. Suitable catalysts include acids, bases and organotitanium compounds. Sulfonic acids, such as trifluoromethanesulfonic acid, are preferred catalysts.

The weight of catalyst typically constitutes from 0.1 to 5 percent of the combined weight of all reactants.

Reactions involving exchanges of silicon bonded alkoxy groups generate the alcohol corresponding to the original silicon-bonded alkoxy group as a by-product. Because these reactions are often reversible, it is usually desirable to remove this by-product alcohol by distillation as the reaction progresses. The course of reactions involving the generation and removal of alcohol by-products is monitored measuring the amount of by-product collected.

Methanol and ethanol are the lowest boiling alcohols and are most easily removed during preparation of the present adhesion-promoting additives. It is therefore preferable that the alkoxy groups represented by OR⁷ in the foregoing formulae, are methoxy or ethoxy.

The reactants and catalyst are heated for a period of time sufficient to achieve a substantially complete reaction, as indicated by the amount of by-product alcohol or ketone collected. This time period is typically from 1 to 5 hours and the reaction mixture is preferably heated from 50 to 120°C.

A liquid diluent that may also function as a solvent for the reactants may be included in the reaction mixture. Suitable diluents include alcohols, in addition to aliphatic and aromatic hydrocarbons. All diluents should be liquid at ambient temperature and boil within the range of 50 to 200°C. Representative diluents include alcohols such as methanol, ethanol and isopropanol, aliphatic hydrocarbons such as hexane and heptane and aromatic hydrocarbons such as toluene and xylene.

Preferred embodiments of the present reaction products are flowable at 25 to 35°C.

One embodiment of the present reaction products is an organosilicon compound of the formula

R¹(OSiR²ₙR³ₚY₃₋ₙ₋ₚ)ₘ (1)

wherein R¹, R², R³, Y, m, n and p are as defined above.

The embodiment represented by formula 1 contains m moles of the silane residue per molecule of polyhydric alcohol and each silicon atom is bonded to only one residue of the polyhydric alcohol.

Formula 1 does not represent the only embodiment of the present reaction products. If more than one polyhydric alcohol residue is bonded to each silicon atom and Y is the preferred alkoxy group OR⁷, the general formula of this reaction product can be expressed as

(R⁷O)₃₋ₙ₋ₚR²ₙR³ₚSiOR¹(OSiR²ₙR³ₚ(OR⁷)₂₋ₙ₋ₚOR¹)_{x -}OSiR²ₙR³ₚ(OR⁷)₃₋ₙ₋ₚ

where n is 0 or 1, p is 1 or 2, the sum of n and p does not exceed 2 and x is at least 1. If the polyhydric alcohol residues represented by R¹O-in this formula are bonded to more than one silicon atom, the resultant product will be oligomeric or polymeric.

Because both the polyhydric alcohol (ingredient A) and the silanes referred to as ingredients B and C contain more than one reactive group, the present reaction products are typically mixtures of monomeric and oligomeric compounds. One of these species will usually predominate. The predominating species is dependent upon a number of variables such as the number of carbon atoms and hydroxyl groups present in the polyhydric alcohol used to prepare the reaction product, the relative amounts of silane(s) and polyhydric alcohol used to prepare this product and the conditions under which the organosilane(s) and alcohol are reacted.

The polyol/organosilane reaction products of the present invention are useful as adhesion-promoting additives for organosiloxane compositions. The polymers contain functional groups capable of reacting to cause crosslinking, also referred to as curing, of the polymer. Polymers containing these type of reactive groups are described in the prior art. The reactions used to cure organosiloxane compositions include 1) the reaction of silicon-bonded hydrolyzable groups such as a alkoxy with atmospheric moisture, optionally in the presence of a catalyst, 2) the reaction of an organohydrogensiloxane crosslinker with polyorganosiloxanes containing silicon-bonded hydroxyl groups or in a hydrosilation reaction with olefinically unsaturated hydrocarbon groups such as vinyl or hexenyl in the presence of a platinum group metal-containing catalyst, and 3) cationic or free radical reactions initiated by the decomposition of photolytically unstable compounds upon exposure to high energy radiation.

Examples of organopolysiloxanes suitable for use with the present adhesion promoters are described in US Patent 5,486,565.

The excellent adhesion exhibited by cured organopolysiloxanes containing the organosilicon compositions of this invention as adhesion promoters are desirable for a variety of end use applications, particularly in electronics, construction, packaging, automotive and consumer markets.

The following examples describe preparation of preferred embodiments of the present reaction products and their use as adhesion-promoting additives in organosiloxane compositions. Unless otherwise specified all parts and percentages are by weight. Viscosities were measured at 25°C.

### Example 1

A reaction product of the present invention, referred to hereinafter as 1, was prepared by weighing 85.51 g of 3-glycidoxypropyltrimethoxysilane and 1.0 g of a sulfonated poly(styrene/divinylbenzene/ethylstyrene) strongly acidic synthetic resin catalyst (Dowex® DR2040 Ion Exchange Resin) into a three-necked, round bottom flask. The flask was then equipped with a magnetic stirrer, thermometer, Thermo-Watch® temperature monitor, addition funnel, distillation head, condenser, receiver flask cooled with dry ice and a nitrogen purge. All the glassware was predried at 120°C. prior to use. Into the addition funnel had been weighed 14.49 g ethylene glycol and 14.49 g methyl alcohol and the ingredients mixed. The reaction mixture was stirred and heated to 90°C., at which time the ethylene glycol/methyl alcohol solution was added slowly over 60 minutes. The reaction mixture remained clear.

Heating of the reaction mixture at 90°C. was continued for an additional 20 minutes, at which time the nitrogen purge was stopped and vacuum applied to the reactor. The pressure was reduced to about 50 Torr (mm Hg) in 13 minutes and maintained at that pressure for 15 minutes. The reaction was then cooled, brought to atmospheric pressure and pressure filtered through Whatmans #1 filter paper. 64.7 g of a clear liquid was recovered as reaction product 1.

### Example 2

A reaction product of the present invention, referred to hereinafter as 2, was prepared by weighing 41.41 g allyltriethoxysilane, 42.21 g tetraethyl orthosilicate and 0.10 g tetrabutyl titanate into a three-necked, round bottom flask. The flask was then equipped as described in Example 1. Into the addition funnel had been weighed 16.26 g ethylene glycol and 16.26 g ethyl alcohol and the ingredients mixed. The reaction was then stirred, heated to 90°C. and the ethylene glycol /ethyl alcohol solution added slowly over 50 minutes. The initially yellow mixture in the reaction flask became almost clear and colorless upon addition of the ethylene glycol/ethyl alcohol solution. Heating at 90°C. was continued for an additional 20 minutes, at which time the nitrogen purge was discontinued and vacuum applied. The pressure was reduced to 50 Torr (mm Hg) in 5 minutes and maintained at that pressure for 15 minutes. The reaction mixture was then cooled, which caused it to become cloudy. The contents of the reactor were brought to atmospheric pressure, pressure filtered through Whatmans #1 filter paper and a clear product recovered as reaction product 2.

### Example 3

A reaction product of the present invention, referred to hereinafter as 3, was prepared by weighing 86.11 g of 3-methacryloxypropyltrimethoxysilane and 0.10 g tetrabutyl titanate into a three-necked, round bottom flask. The flask was then equipped as described in Example 1. Into the addition funnel had been weighed 13.89 g ethylene glycol and 13.89 g ethyl alcohol and the ingredients mixed. The reaction was then stirred, heated to 90°C. and the ethylene glycol/ethyl alcohol solution added slowly over 55 minutes. The initially bright yellow mixture in the reaction flask became very light yellow upon addition of the ethylene glycol/ethyl alcohol solution. After reaction had continued for an additional 20 minutes at 90°C., the nitrogen purge was stopped and vacuum applied. The pressure was reduced to 50 Torr (mm Hg) in 5 minutes and maintained at that pressure for 15 minutes. The reaction mixture was then cooled, brought to atmospheric pressure and 86.30 g of a light yellow product recovered as reaction product 3.

### Example 4

A reaction product of the present invention, referred to hereinafter as 4, was prepared by weighing 42.37 g 3-(N-2'-aminoethyl)aminopropyltrimethoxysilane and 0.05 g tetrabutyl titanate into a three-necked, round bottom flask. The flask was then equipped as described in Example 1. Into the addition funnel had been weighed 7.63 g ethylene glycol and 7.63 g ethyl alcohol and the ingredients mixed. The reaction was then stirred, heated to 90°C. and the ethylene glycol/ethyl alcohol solution added slowly over 30 minutes. The reaction mixture in the reaction flask was a yellow transparent fluid. Heating at 90°C. was continued for an additional 20 minutes following completion of the addition, at which time the nitrogen purge was stopped and vacuum applied. The pressure was reduced to 50 Torr (mm Hg) in 5 minutes and maintained at that pressure for 15 minutes. The reaction was then cooled, brought to atmospheric pressure and 42.16 g of a transparent, orange/yellow product recovered as reaction product 4.

### Comparative Example 1

This example demonstrates preparation of a prior art reaction product of tetraethyl orthosilicate and ethylene glycol, referred to hereinafter as reaction product C1. This product was prepared by weighing 84.30 g tetraethyl orthosilicate and 0.10 g tetrabutyl titanate into a three-necked, round bottom flask. The flask was then equipped as in Example 1. Into the addition funnel had been weighed 15.10 g ethylene glycol and 15.70 g ethyl alcohol and the ingredients mixed. The reaction was then stirred, heated to 90°C. and the ethylene glycol/ethyl alcohol
solution added slowly over 55 minutes. The initially yellow mixture in the reaction flask became clear upon addition of the ethylene glycol/ethyl alcohol solution. The reaction mixture was heated at 90°C. for an additional 20 minutes at 90°C., at which time the nitrogen purge was stopped and vacuum applied. The pressure was reduced to 50 Torr (mm Hg) in 14 minutes and maintained at that pressure for 20 minutes. The reaction was then cooled, brought to atmospheric pressure and 69.27 g of a transparent, yellow product recovered that will be referred to as reaction product C1.

### Example 5

Curable organosiloxane compositions containing one of the reaction products 1, 2, 3 or C1 at two concentration levels were prepared by making a physical blend of the ingredients. Tetrabutyl titanate (TBT) was used as a catalyst to increase the rate of adhesion development in the curable compositions. Reaction product C1 described above, tetraethyl orthosilicate (TEOS) as C2, ethyl polysilicate (EPS) as C3 and 3-glycidoxypropyltrimethoxysilane as C4 were used for comparative purposes. Other curable organosiloxane compositions prepared for comparative purposes contained either no organosilicon compound as an adhesion promoter or organosilicon compounds described in the prior art as promoting adhesion of curable silicone compositions.

Curable organosiloxane compositions were prepared by blending the following ingredients to homogeneity: 97.88 parts of a dimethylvinylsiloxy-terminated polydimethyl -siloxane having a viscosity of 0.4 Pa·s at 25°C.; 92.87 parts of quartz with an average particle size of 5 µl; 0.9 part of zinc oxide: 0.5 part carbon black; as the crosslinking agent, 5.98 parts of a trimethylsiloxy-terminated polydiorganosiloxane having an average of five methylhydrogensiloxane units and three dimethylsiloxane units per molecule with a silicon-bonded hydrogen atom content of 0.8 weight percent; a hydrosilation catalyst containing 0.2 part of a reaction product of hexachloroplatinic acid and sym-tetramethyldivinyldisiloxane that had been diluted with a liquid dimethylvinylsiloxy-terminated polydimethylsiloxane in an amount sufficient to achieve a platinum content of 0.7 weight percent; 0.1 part of cyclic methylvinylsiloxanes as the platinum catalyst inhibitor, 0.199 part tetrabutyl titanate and either 5.04 or 9.95 parts of the adhesion promoter indicated in Table 1.

Since reaction products 2 and 3 contain reactive unsaturation that can participate in the hydrosilylation cure and thus alter the stoichiometry of the curing components, additional crosslinking agent was added to compositions C, D, E and F in an amount sufficient to provide a constant molar ratio of silicon hydride functionality to reactive unsaturation introduced by the reaction product, as indicated in Table 1.

**TABLE 1**

| Composition | A | B | C | D | E | F |
|---|---|---|---|---|---|---|
| Reaction Product | 1 | 1 | 2 | 2 | 3 | 3 |
| Parts Additive | 5.04 | 9.95 | 5.04 | 9.95 | 5.04 | 9.95 |
| Additional Crosslinking Agent(parts) | 0.00 | 0.00 | 1.33 | 2.19 | 2.39 | 4.64 |

**Table 2**

| COMPARATIVE COMPOSITIONS | | | | | | | | | |
|---|---|---|---|---|---|---|---|---|---|
| Composition | G | H | I | J | K | L | M | N | O |
| Reaction Product | None | C1 | C1 | C2 | C2 | C3 | C3 | C4 | C4 |
| Parts Additive | --- | 5.04 | 9.95 | 5.04 | 9.95 | 5.04 | 9.95 | 5.04 | 9.95 |

Compositions G through O, shown in Table 2, were for comparative purposes.

Portions of the deaired compositions were drawn down as a 10 mil (0.25 mm) thick film (wet thickness) onto the following substrates: glass microscope slides; panels measuring 7.6 by 12.7 cm. formed from 3003 H14 alloy mill finish aluminum (referred to as milled aluminum) available from the Q-Panel Company, Cleveland, Ohio; and panels of bare aluminum, copper and FR4 epoxy board. Curing of the coatings was conducted either at room temperature or for 30 minutes at 70°C. in a forced air oven followed by additional cure time for one or three days at room temperature.

The adhesion test consisted of scratching the cured coating with the blade of a metal spatula to determine whether the coating could be removed without leaving a residue on the surface (adhesive failure, rating = 0) or whether failure occurred within the coating layer, resulting in at least a portion of the coating material in the test area adhering to the substrate (cohesive failure, rating = 5). On some samples the coating exhibited adhesive failure in one area and cohesive failure in another (adhesive/cohesive failure, rating = 1). Coatings exhibiting cohesive failure were further tested to determine if the residue on the substrate and the adjacent coating material could be removed by rubbing with a finger. If the coating could be removed in this manner, the pressure required to remove the coating was rated on a scale of slight (2), medium (3) or high (4).

Table 3 summarizes the adhesion results obtained following cure in the oven (In.) and after additional curing at room temperature for 1 day (1D) or 3 days (3D).

**Table 3**

| OVEN CURE ADHESION | | | | | | | | | | | | | | | |
|---|---|---|---|---|---|---|---|---|---|---|---|---|---|---|---|
| | Glass | | | Bare Al | | | Millet Al | | | Copper | | | Epoxy | | |
| Comp. | In | 1D | 3D | In | 1D | 3D | In | 1D | 3D | In | 1D | 3D | In | 1D | 3D |
| A | 0 | 0 | 5 | 0 | 0 | 0 | 0 | 0 | 0 | 0 | 0 | 0 | 0 | 0 | 0 |
| B | 0 | 0 | 5 | 0 | 0 | 0 | 0 | 0 | 1 | 0 | 0 | 0 | 0 | 0 | 0 |
| C | 5 | 5 | 5 | 5 | 5 | 5 | 5 | 5 | 5 | 0 | 0 | 1 | 5 | 5 | 5 |
| D | 5 | 5 | 5 | 5 | 5 | 5 | 5 | 5 | 5 | 0 | 0 | 0 | 5 | 5 | 5 |
| E | 0 | 5 | 5 | 0 | 0 | 0 | 0 | 0 | 0 | 0 | 0 | 0 | 5 | 5 | 5 |
| F | 0 | 1 | 0 | 0 | 0 | 0 | 0 | 0 | 0 | 0 | 0 | 0 | 5 | 5 | 5 |
| G | 2 | 5 | 5 | 0 | 0 | 0 | 0 | 0 | 0 | 0 | 0 | 0 | 0 | 0 | 0 |
| H | 5 | 5 | 5 | 5 | 5 | 5 | 5 | 5 | 5 | 0 | 0 | 5 | 0 | 1 | 1 |
| I | 5 | 5 | 5 | 5 | 5 | 5 | 5 | 5 | 5 | 0 | 1 | 5 | 1 | 1 | 5 |
| J | 0 | 3 | 5 | 0 | 0 | 5 | 0 | 0 | 0 | 0 | 0 | 0 | 0 | 0 | 0 |
| K | 0 | 0 | 5 | 0 | 0 | 5 | 0 | 0 | 0 | 0 | 0 | 0 | 0 | 0 | 0 |
| L | 0 | 0 | 0 | 0 | 0 | 0 | 0 | 0 | 0 | 0 | 0 | 0 | 0 | 0 | 0 |
| M | 0 | 0 | 0 | 0 | 0 | 0 | 0 | 0 | 0 | 0 | 0 | 0 | 0 | 0 | 0 |
| N | 0 | 0 | 5 | 0 | 0 | 0 | 0 | 5 | 0 | 0 | 1 | 0 | 0 | 0 | 0 |
| O | 0 | 0 | 0 | 0 | 0 | 0 | 0 | 2 | 5 | 0 | 0 | 0 | 0 | 0 | 0 |

Compositions C and D were also coated onto the same substrates and cured at only room temperature. After 1 day cohesive failure (5) was attained on glass, bare aluminum and mill aluminum. After 7 days cohesive failure was attained on epoxy.

The adhesion results summarized in Table 3 demonstrate the value of the organosilicon compositions of the present invention as adhesion promoters for curable organopolysiloxane compositions which contain them. Compositions C and D show the excellent adhesion to multiple substrates developed upon incorporation of reaction product 2 into the composition. While compositions H and I, which contained reaction product C1 for comparative purposes, gave good adhesion to glass, bare aluminum and milled aluminum immediately upon cure, they did not afford adhesion to epoxy as good as that provided by compositions C and D. Adhesion to both metallic as well as plastic substrates can be very important in some applications.

Moreover, with the exception of the adhesion promoter (additive) employed, compositions C and D of the instant invention were essentially identical to compositions 1 and 3, respectively, of the examples of above cited US Patent 5,486,565 to Gentle et al. Thus, Table 4 shows recalculated proportions based on 100 parts of curable silicone formulation (e.g., Part A + Part B of the Gentle et al. examples) as well as similar recalculated values for instant compositions C and D.

**Table 4**

| | Composition C | Composition 1 | Composition D | Composition 3 |
|---|---|---|---|---|
| Curable Silicone Formulation | 100 | 100 | 100 | 100 |
| TBT | 0.10 | 0.10 | 0.10 | 0.10 |
| Additive | 2.53* | 2.56** | 5.00* | 5.35** |
| Crosslinker | 0.67 | 0.72 | 1.40 | 1.36 |
| | | | | |

| | | | | |
|---|---|---|---|---|
| * Reaction Product 2 (reaction of allyltriethoxysilane, tetraethyl orthosilicate and ethylene glycol). | | | | |
| ** Adhesion Additive D1 of Gentle et al. (reaction product of tetraethyl orthosilicate, ethylene glycol and undecylenyl alcohol). | | | | |

In Table 5, adhesion values for Compositions C and D (tested according to the same methods described in the Gentle et al. patent) are compared against corresponding values for compositions 1 and 3 (reported in Table 4 of this prior art disclosure). For direct comparison, the adhesion values are all reported according to the above described numerical definitions.

**Table 5**

| OVEN CURE ADHESION | | | | | | | | | | | | | | | |
|---|---|---|---|---|---|---|---|---|---|---|---|---|---|---|---|
| | Glass | | | Bare Al | | | Milled Al | | | Copper | | | Epoxy | | |
| Comp. | In | 1D | 3D | In | 1D | 3D | In | 1D | 3D | In | 1D | 3D | In | 1D | 3D |
| C | 5 | 5 | 5 | 5 | 5 | 5 | 5 | 5 | 5 | 0 | 0 | 1 | 5 | 5 | 5 |
| D | 5 | 5 | 5 | 5 | 5 | 5 | 5 | 5 | 5 | 0 | 0 | 0 | 5 | 5 | 5 |
| 1 | 5 | 5 | - | 0 | 5 | - | 5 | 5 | - | 0 | 5 | - | 0 | 0 | - |
| 3 | 5 | 5 | - | 2 | 5 | - | 5 | 5 | - | 0 | 0 | - | 2 | 2 | - |

It can be seen from Table 5 that the additives of the present invention provide improved adhesion for essentially identical curable silicone compositions when tested on bare aluminum and epoxy substrates.

Compositions E and F, which contained reaction product 3, afforded excellent adhesion to epoxy but poor adhesion to the metals tested. This type of preferential adhesion can be of value, for example, in use of the composition for molding applications where adhesion to plastic inserts is desired but adhesion to the metal mold is not.

Not all reaction products of the present invention will perform the same when examined in different curable compositions or on different substrates as the examples in Table 3 demonstrate. The component types and amounts used to prepare the reaction products of the present invention intended for use as adhesion promoters should be selected with the curable composition and substrate adhesion requirements under consideration. Thus, while reaction product 1 performed poorly in the hydrosilylation curable composition of Example 5 and the substrates tested as evidenced by the adhesion results presented in Table 3, very different results are expected in compositions where the epoxy functionality could participate in the cure reaction.

### Example 6

An ultraviolet (UV) curable composition was prepared by combining 97 parts of a UV curable organosiloxane composition. 0.50 parts of tetrabutyl titanate and 2.5 parts of reaction product 4 described in the preceding Example 4. The curable siloxane composition was prepared by blending the following ingredients to homogeneity:
1) 79.4 parts of a mixture containing 32 weight percent xylene and 68 weight percent of a benzene soluble silicone resin containing dimethylvinylsiloxy units, trimethylsiloxy units and SiO₂ units where the ratio of the sum of moles of dimethylvinylsiloxy units and trimethylsiloxy units to SiO₂ units was 0.65:1 and the resin contained about 1.9 weight percent vinyl radicals; and
2) 100 parts of a dimethylvinylsiloxy-endblocked polydimethylsiloxane having a viscosity of about 2 Pa·s.

The xylene was removed from the resultant mixture by heating it under reduced pressure, yielding a clear polymer-resin blend. 80.2 parts of this blend were combined with 1) 17.8 parts of a mercapto-functional polyorganosiloxane having an average degree of polymerization of 50 and containing an average of five mercapto units and 2) 0.98 part of a photoinitiator available as Darocur® 1173 (2-hydroxy-2-methyl-1-phenyl-propan-1-one) and 0.98 part of diisopropylaminoethanol to yield a clear UV curable composition which had a viscosity of 2.1 Pa·s.

Portions of the UV curable composition were drawn down at 10 mils (0.25 mm) wet thickness onto glass microscope slides, mill finish aluminum panels described in Example 1, bare aluminum panels and FR4 epoxy board. The compositions were then cured by exposure to an ultraviolet lamp using an exposure of 500 mJ/cm². After three days at ambient conditions cohesive failure (a rating of 5) was obtained an all the substrates. For comparative purposes, a UV curable siloxane composition containing the same ingredients with the exception of the adhesion promoter was evaluated in a similar manner. After three days at ambient conditions adhesive failure (0) was obtained on all comparative substrates.

## Claims

1. An organosilicon composition comprising at least one reaction product of (A) a polyhydric alcohol of the general formula R¹(OH)ₘ and (B) a silane of the formula R²ₙR³ₚSiY₄₋ₙ₋ₚ, wherein R¹ is a hydrocarbon radical having a valence of m and no ethylenic unsaturation, R² is an unsubstituted hydrocarbon radical, R³ is a monovalent hydrocarbon radical containing at least one organofunctional substituent selected from CH₂=CH-, acryloxy, methacryloxy, epoxy, carboxy, amino, amido, acrylamido, mercapto, acrylamido, methacrylamido and or 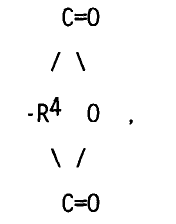 wherein R⁴ is a trivalent hydrocarbon radical; Y represents a hydrolyzable group, m is at least 2, n is 0 or 1 and p is 1 or 2, with the proviso that the sum of n + p does not exceed 2 and the weight ratio of ingredient A to silane B is from 1:20 to 10:1.

2. A composition according to claim 1 wherein said polyhydric alcohol constitutes from 5 to 90 weight percent of the total of ingredients (A) and (B)

3. A composition according to any of the preceding claims wherein R¹ represents an alkylene radical containing from 2 to 20 carbon atoms, R² is an alkyl radical containing from 1 to 4 carbon atoms, R³ is selected from 3-glycidoxypropyl, vinyl, hexenyl, 3-methacryloxypropyl or N-(2-aminoethyl)-3-aminopropyl, Y is selected from alkoxy, isoalkenyloxy, carboxy, ketoximo, amino or amido; and m is from 2 to 4, inclusive.

4. A composition according to any of the preceding claims wherein said polyhydric alcohol is selected from ethylene glycol, propylene glycol, 1,3-propanediol, glycerol, 1,4-butanediol, neopentyl glycol, 2,2,2-trimethylolpropane, 2,2,2,2-tetramethylolpropane or 1,10-decanediol; and silane B is selected from 3-glycidoxypropyltrimethoxysilane, allyltriethoxysilane, 3-methacryloxypropyltrimethoxysilane or 3-(N-2'-aminoethyl)aminopropyltrimethoxysilane.

5. A composition according to any of the preceding claims wherein silane B constitutes from 50 to 90 percent of the combined weight of polyhydric alcohol A and silane B.

6. A composition according to any of the preceding claims where said ingredients further comprise a silane (C) of the formula R⁵ₜSiY'₄₋ₜ, wherein R⁵ is a hydrocarbon radical selected from the same group as R², Y' represents a hydrolyzable group selected from the same group as Y and t is 0 or 1 and wherein said silane C constitutes 30 to 70 percent of the total moles of silanes B and C.

7. A composition according to claim 5 wherein silane C is selected from methyltrimethoxysilane or tetraethyl orthosilicate, the weight ratio of ingredient A to the combination of silanes B and C is from 1:1 to 1:10 and silane C constitutes from 30 to 70 percent of the total moles of silanes B and C.
